# EUROPÄISCHE PATENTSCHRIFT

(11) **EP 3 028 806 B1**
(45) Veröffentlichungstag und Bekanntmachung des Hinweises auf die Patenterteilung: **26.02.2020**
(21) Anmeldenummer: 15197237.9
(22) Anmeldetag: 01.12.2015
(51) Int. Cl.: B23Q 1/01, B23Q 7/00, B23Q 7/03, B23Q 39/04

(54) **BEARBEITUNGSVERFAHREN**
PROCESSING METHOD
METHODE DE TRAITEMENT

(30) Priorität: 02.12.2014 DE 102014224604
(43) Veröffentlichungstag der Anmeldung: 08.06.2016
(73) Patentinhaber: HOMAG GmbH, 72296 Schopfloch (DE)
(72) Erfinder: Rathgeber, Peter, 72280 Dornstetten (DE)
(74) Vertreter: Hoffmann Eitle

(56) Entgegenhaltungen:
- EP-A1- 2 392 439
- EP-A2- 1 231 037
- DE-A1- 3 027 873
- DE-A1- 10 214 554
- DE-A1-102006 060 169
- DE-A1-102009 025 816

## Beschreibung

### Technisches Gebiet

Die vorliegende Erfindung bezieht sich auf ein Verfahren zum Bearbeiten insbesondere plattenförmiger oder länglicher Werkstücke (Kanthölzer), die bevorzugt zumindest abschnittsweise aus Holz, Holzwerkstoffen, Kunststoff oder dergleichen bestehen. Mit einer solchen Bearbeitungsmaschine werden Werkstücke aus Holz, Holzwerkstoffen, Kunststoff oder metallische Werkstücke bearbeitet. Das Einsatzgebiet einer solchen Bearbeitungsmaschine liegt insbesondere im Bereich der Möbel- und Bauelementeindustrie.

### Stand der Technik

Im Bereich der Werkzeugmaschinen für die Holzbearbeitung sind zwei wesentliche Maschinentechnologien bekannt, nämlich die Stationär- und die Durchlauftechnik. Bei der Stationärtechnik ist das zu bearbeitende Werkstück während der Bearbeitung stationär bzw. lagefixiert angeordnet, während sich das Bearbeitungswerkzeug zur Bearbeitung relativ zum Werkstück bewegt. Im Gegensatz dazu wird bei der Durchlauftechnik das Werkstück mittels einer Fördereinrichtung an einem Werkzeug vorbeigefördert. Kurzum wird bei der Stationärtechnik die Relativbewegung zur Bearbeitung zwischen Werkzeug und Werkstück durch Bewegung des Werkzeugs herbeigeführt, während bei der Durchlauftechnik das Gegenteil der Fall ist.

Beide Maschinentechnologien haben jeweils Nachteile. So stellt die Durchlauftechnik im Allgemeinen eine begrenzte Bearbeitungsvielfalt bereit, da Werkstücke im Wesentlichen lediglich entlang deren Schmalseiten in Förderrichtung bearbeitbar sind, während die Stationärtechnik im Vergleich geringe Stückzahlen pro Zeit ermöglicht.

So offenbart beispielsweise die EP 2 392 439 A1 eine Bearbeitungsvorrichtung zum Bearbeiten eines Werkstücks im Rahmen der Stationärtechnik. Ferner offenbart die DE 102 14 554 A1 eine Bearbeitungsvorrichtung zum Bearbeiten eines Werkstücks im Durchlaufverfahren mit einer Bearbeitungseinrichtung, einer umlaufenden Fördereinrichtung, einer Stützeinrichtung, insbesondere einem Portal, welche sich vollständig, über die Fördereinrichtung erstreckt und an der die Bearbeitungseinrichtung vorgesehen ist, einer Verschiebeeinrichtung zum Verschieben der Stützeinrichtung entlang der Förderrichtung, wobei die Verschiebeeinrichtung eine Antriebseinrichtung zum Antreiben der Verschiebebewegung aufweist, mindestens einer weiteren Stützeinrichtung, mit einer weiteren Verschiebeeinrichtung, wobei die Stützeinrichtungen unabhängig voneinander entlang der Förderrichtung verschiebbar sind, und mindestens einer weiteren Bearbeitungseinrichtung zum Bearbeiten des Werkstücks, die an der mindestens einen weiteren Stützeinrichtung (7) vorgesehen ist.

### Darstellung der Erfindung

Aufgabe der vorliegenden Erfindung ist es, ein Verfahren bereitzustellen, welches eine hohe Bearbeitungsvielfalt sowie eine hohe Stückzahl pro Zeit ermöglicht.

Diese Aufgabe wird erfindungsgemäß durch ein Verfahren zum Bearbeiten eines Werkstücks nach Anspruch 1 gelöst. Besonders bevorzugte Ausführungsformen der Erfindung sind in den abhängigen Ansprüchen angegeben.

Der vorliegenden Erfindung liegt der Gedanke zu Grunde, die Vorteile der Durchlauftechnik mit den Vorteilen der Stationärtechnik zu vereinen.

Das erfindungsgemäße Verfahren ermöglicht insbesondere durch die Fördereinrichtung eine hohe Stückzahl pro Zeiteinheit und insbesondere durch die Stützeinrichtung, welche sich über die Fördereinrichtung erstreckt, eine hohe Bearbeitungsvielfalt. Die Vorteile der Durchlauftechnik werden demnach mit den Vorteilen der Stationärtechnik vereint, sodass im Ergebnis ein vollkommen neues Maschinensystem bereitgestellt wird. Die Stützeinrichtung kann in Form eines Portals, eines Auslegers oder in einer anderen Ausgestaltung ausgebildet sein.

Die Vorrichtung weist mindestens eine weitere Stützeinrichtung, die sich zumindest abschnittsweise, insbesondere vollständig, über die Fördereinrichtung erstreckt, und mindestens eine weitere Bearbeitungseinrichtung zum Bearbeiten des Werkstücks auf, die an der mindestens einen weiteren Stützeinrichtung vorgesehen ist. Die Vorrichtung kann auch mehr als zwei, z.B. drei, vier, insbesondere fünf, oder mehr Stützreinrichtungen, die sich zumindest abschnittsweise, insbesondere vollständig, über die Fördereinrichtung erstrecken, mit jeweils einer Bearbeitungseinrichtung, wie oben beschrieben, aufweisen. Hierdurch können vorteilhafterweise auf einer Vorrichtung mehrere Bearbeitungseinrichtungen bereitgestellt werden. Dabei ist es denkbar, dass die Bearbeitungseinrichtungen oder einige der Bearbeitungseinrichtungen verschiedene Bearbeitungstechnologien bereitstellen. Ebenso ist es denkbar, dass die Bearbeitungseinrichtungen oder einige der Bearbeitungseinrichtungen die gleiche Bearbeitungstechnologie bereitstellen. Weist die Vorrichtung mehrere Stützeinrichtungen mit jeweils einer Bearbeitungseinrichtung auf, kann durch das mehrfache, z.B. zweifache, Vorsehen einer bestimmten Bearbeitungseinrichtung mit einer bestimmten Bearbeitungstechnologie die Leistung der Vorrichtung signifikant erhöht werden. Dies ist insbesondere auch dann interessant, wenn auf der Vorrichtung verschiedene Bearbeitungstechnologien bereitgestellt werden, da so die Bearbeitungstechnologie, welche auf der Vorrichtung am zeitintensivsten ist, mehrfach bereitgestellt werden kann, sodass die ein höherer Teildurchsatz ermöglicht wird. Die Stützreinrichtungen können in Form von Auslegern, Portalen oder in einer anderen Ausgestaltung vorgesehen sein.

Dabei können die Stützeinrichtungen auf einer Seite der Fördereinrichtung angeordnet sein. Dies stellt eine relativ einfache, kostengünstige und platzsparende Vorrichtung bereit.

Alternativ kann auf beiden Seiten der Fördereinrichtung eine Trageinrichtung vorgesehen werden, welche wiederum auf beiden Seiten der Fördereinrichtung Stützelemente mit Bearbeitungseinheiten aufnehmen. Somit besteht die Möglichkeit, auf beiden Seiten der Schmalfläche gleichzeitig Bearbeitungen durchzuführen.

Alternativ oder zusätzlich können an einem Stützelement zwei Bearbeitungseinheiten aufgenommen werden, um z.B. beide Schmalflächen eines Werkstücks parallel zu bearbeiten.

Die Vorrichtung weist eine Verschiebeeinrichtung zum Verschieben, insbesondere variablen Verschieben, der Stützeinrichtung entlang der Förderrichtung auf. Dies führt zu dem Vorteil, dass die Relativbewegung zwischen Werkstück und Werkzeug sowohl über die Fördereinrichtung als auch über die Stützeinrichtung als auch über eine Kombination der beiden herbeiführbar ist.

Die Vorrichtung ist so ausgestaltet und eingerichtet, eine Relativbewegung zwischen Bearbeitungseinrichtung und Werkstück zum Bearbeiten des Werkstücks sowohl über die Fördereinrichtung als auch über die Stützeinrichtung herbeizuführen.

Dabei können die Stützeinrichtungen auf einer Seite der Fördereinrichtung angeordnet sein. Dies stellt eine relativ einfache, kostengünstige und platzsparende Vorrichtung bereit.

Alternativ kann auf beiden Seiten der Fördereinrichtung eine Trageinrichtung und vorgesehen werden, welche wiederum auf beiden Seiten der Fördereinrichtung Stützelemente mit Bearbeitungseinheiten aufnehmen. Somit besteht die Möglichkeit, auf beiden Seiten der Schmalfläche gleichzeitig Bearbeitungen durchzuführen.

Alternativ oder zusätzlich können an einem Stützelement zwei Bearbeitungseinheiten und aufgenommen werden, um z.B. beide Schmalflächen eines Werkstücks parallel zu bearbeiten. Bevorzugt weist die Vorrichtung ferner mindestens eine weitere Verschiebeeinrichtung zum Verschieben, insbesondere variablen Verschieben, der mindestens einen weiteren Stützeinrichtung entlang der Förderrichtung auf. Hier wird auf die oben genannten Vorteile verwiesen. Durch die Verschiebbarkeit der mehreren Stützeinrichtungen wird der oben hinsichtlich der einen Stützeinrichtung genannte Effekt zusätzlich verstärkt.

Die Verschiebeeinrichtung und die mindestens eine weitere Verschiebeeinrichtung können ferner jeweils einen Verschiebebereich aufweisen, wobei sich die Verschiebebereiche zumindest abschnittsweise, bevorzugt zu mehr als 50%, besonders bevorzugt zu mehr als 90%, überlappen. Unter Verschiebebereich wird im Rahmen der vorliegenden Anmeldung der maximale Verfahrbereich, von dem einen Ende zum anderen Ende, der Verschiebeeinrichtung entlang der Fördereinrichtung verstanden. Durch diese bevorzugte Ausgestaltung überlappen sich die Verschiebebereich der Stützeinrichtungen. Hierdurch wird eine Ausgestaltung ermöglicht, bei der ein Werkstück durch mehrere Bearbeitungseinrichtungen gleichzeitig bearbeitbar ist. Die Stückzahl pro Zeit kann folglich durch Parallelisierung der Bearbeitungsschritte signifikant erhöht werden. Ebenso wird die Bearbeitungsvariabilität der Vorrichtung vergrößert.

Bevorzugt weist die Vorrichtung eine Führung zum Führen der Stützeinrichtung(en) entlang der Förderrichtung auf. Diese Führung ist bevorzugt zum gemeinsamen Führen aller Stützeinrichtungen ausgestaltet. Es wird demnach eine kosteneffiziente Vorrichtung mit relativ einfacher Ausgestaltung bereitgestellt.

In einer bevorzugten Ausführungsform sind die Stützeinrichtungen bzw. ist die Stützeinrichtung dabei parallel zur Förderrichtung verschiebbar. Dies stellt eine besonders kompakte Vorrichtung bereit, die eine einfache und kostengünstige Maschinensteuerung ermöglicht.

Die Stützeinrichtung(en) kann bzw. können jeweils eine Verstelleinrichtung aufweisen, die ausgestaltet ist, die Bearbeitungseinrichtung quer zur Förderrichtung, bevorzugt auch in Höhenrichtung der Vorrichtung, zu verstellen. Folglich wird eine signifikant höhere Bearbeitungsvielfalt ermöglicht, da eine weitere Bearbeitungsachse vorgesehen ist.

Die Fördereinrichtung weist bevorzugt ferner eine Halteeinrichtung zum Fixieren des Werkstücks während der Bearbeitung auf der Fördereinrichtung auf. Diese Ausgestaltung ermöglicht eine Bearbeitung des Werkstücks durch die Bearbeitungseinrichtung(en) der Stützeinrichtung(en) ohne eine zusätzliche Andrückeinrichtung zum Andrücken des Werkstücks an die Fördereinrichtung. Folglich wird eine platzsparende wartungsarme Vorrichtung bereitgestellt. Die Halteeinrichtung ist dabei bevorzugt ausgestaltet, das Werkstück von der Auflageseite des Werkstücks aus, besonders bevorzugt mittels Vakuum, zu fixieren. Folglich ist bei dieser bevorzugten Ausgestaltung keine Oberdruckeinspannung der Werkstücke erforderlich. Dies ist insofern besonders vorteilhaft, da das Werkstück zur Bearbeitung fixierbar ist, ohne das Schmalseiten oder zumindest ein Großteil der Schmalseiten bzw. die Werkstückoberseite durch eine Andrückeinrichtung verdeckt werden. Demnach ermöglicht diese bevorzugte Ausgestaltung eine 5-Seitenbearbeitung und im Randbereich sogar eine 6-Seitenbearbeitung mit lediglich einer einmaligen Werkstückspannung. Es ist sogar möglich, wenn mehrere Bearbeitungseinrichtungen auf der Vorrichtung vorgesehen sind, eine Werkstückkomplettbearbeitung ohne Umspannen des Werkstücks durchzuführen. Da das Werkstück nicht umgespannt werden muss, können die Fertigungstoleranzen reduziert werden. Ebenso wird die Anzahl der erforderlichen Maschinen und der erforderliche Transportbereich zwischen den Maschinen auf Grund der Möglichkeit auf die Umspannung des Werkstücks zu verzichten verringert. Die erforderliche Hallenfläche nimmt demnach ab.

Es ist ebenso denkbar, dass Werkstück zusätzlich oder alternativ mit pneumatischen, mechanischen oder elektromechanischen Spannern auf der Fördereinrichtung zu fixieren. Die Spanner können dabei ausgestaltet sein, während der Bearbeitung einer Werkstückseite kurzzeitig abzutauchen, um die Bearbeitung aller sechs Werkstückseiten zu ermöglichen.

Besonders bevorzugt wird das Werkstück jedoch lediglich von der Auflageseite des Werkstücks aus fixiert wird. Dies wird beispielsweise mittels eines Vakuumsaugers durchgeführt, die auf einer Förderkette der Fördereinrichtung fixiert sind und demnach bei Bewegung der Förderkette mitbewegt werden.

Alternativ können, wie bereits zuvor erwähnt, an der Förderkette fixierte Spanner vorgesehen sein.

In einer bevorzugten Ausführungsform ist/sind die Bearbeitungseinrichtung(en) ausgewählt aus einer Format-, einer Profil-, einer Nut-, einer Kantenleim-, einer Kapp-, einer Lackier-, einer Bohr-, einer Dübel-, einer Ziehklingen-, einer Schleif-, einer Vergütungs-, einer Beschlagsetzbearbeitungseinrichtung und einer Kombination der vorherigen.

Die Fördereinrichtung ist ferner umlaufend, bevorzugt als Förderkette, ausgestaltet. Dabei ist eine Ausgestaltung mit lediglich einer umlaufenden Fördereinrichtung oder eine Ausgestaltung mit mehreren umlaufenden Fördereinrichtungen, bevorzugt zwei, die insbesondere parallel zueinander angeordnet sind, denkbar. Die umlaufende Fördereinrichtung ermöglicht eine Bearbeitung des Werkstücks bei gleichzeitiger Förderbewegung, und erreicht somit eine besonders hohe Stückzahl an bearbeiteten Werkstücken pro Zeit. Die umlaufende Fördereinrichtung kann dabei bevorzugt ausgestaltet sein, mittels einer Magnetkraft einen umlaufenden Förderstrang bzw. Förderkette an eine Kettenführungsbahn zu ziehen.

Die Verschiebeeinrichtungen und/oder die Verstelleinrichtung(en) kann/können bevorzugt eine Antriebseinrichtung zum Antreiben der Verschiebebewegung bzw. Verstellbewegung aufweisen, die bevorzugt CNC gesteuert ist. Diese bevorzugte Ausgestaltung ermöglicht eine Automatisierung der Vorrichtung, sodass eine erhöhte Stückzahl bei geringerem Personeneinsatz ermöglicht wird.

Das Verfahren umfasst dabei den Schritt des Förderns eines Werkstücks mit einer Fördereinrichtung und des Bearbeitens des Werkstücks mit einer Bearbeitungseinrichtung, die an einer Stützeinrichtung vorgesehen ist, wobei sich die Stützeinrichtung zumindest abschnittsweise, insbesondere vollständig, über die Fördereinrichtung erstreckt, wobei die Relativbewegung zwischen Bearbeitungseinrichtung und Werkstück zum Bearbeiten des Werkstücks durch die Fördereinrichtung herbeigeführt wird, und den Schritt des Bearbeiten des Werkstücks mit der Bearbeitungseinrichtung, wobei die Relativbewegung zwischen Bearbeitungseinrichtung und Werkstück zum Bearbeiten des Werkstücks mit der Stützeinrichtung herbeigeführt wird. Hinsichtlich der Vorteile des Verfahrens wird auf die Ausführungen im Rahmen der Vorrichtung verwiesen.

Die Trageinrichtung(en) und die Fördereinrichtung können über ein gemeinsames, beispielsweise u-förmiges Maschinenbett verbunden sein. Ist das Maschinenbett u-förmig ausgebildet, kann der Bereich zwischen der/den Trageinrichtung(en) und der Fördereinrichtung als Aufnahmebereich für Späne oder andere bei der Bearbeitung der Werkstücke anfallende Abfallprodukte vorgesehen sein.

Wird ein gemeinsames Maschinenbett verwendet, so wird eine besonders steife Ausführung und eine präzise Ausrichtung der Baugruppen zueinander erreicht.

Alternativ zu den genannten Ausgestaltungen ist es möglich, die Trageinrichtung(en) und die Fördereinrichtung jeweils einzeln aufzustellen und zu lagern, um die genannten Baugruppen schwingungstechnisch voneinander zu entkoppeln.

### Kurze Beschreibung der Zeichnungen

- Fig. 1: zeigt eine perspektivische Ansicht einer Vorrichtung zum Bearbeiten eines plattenförmigen Werkstücks gemäß einer ersten Ausführungsform die nicht beansprucht wird.

- Figs. 2 und 3: zeigen perspektivische Ansichten einer Vorrichtung zum Bearbeiten eines plattenförmigen Werkstücks gemäß einer zweiten bevorzugten Ausführungsform der vorliegenden Erfindung.
- Fig. 4: zeigt eine perspektivische Ansicht einer Vorrichtung zum Bearbeiten eines plattenförmigen Werkstücks gemäß einer dritten bevorzugten Ausführungsform der vorliegenden Erfindung.

### Detaillierte Beschreibung der Ausführungsformen

Nachfolgend werden anhand der beigefügten Zeichnungen bevorzugte Ausführungsformen und Modifikationen hiervon im Detail erläutert. Weitere in diesem Zusammenhang genannte Varianten bestimmter Einzelmerkmale können jeweils einzeln miteinander kombiniert werden, um neue Ausführungsformen auszubilden.

Die im Rahmen der bevorzugten Ausführungsformen bearbeiteten Werkstücke sind üblicherweise plattenförmig, insbesondere rechtwinklig. Das Werkstück ist dabei bevorzugt zumindest abschnittsweise aus Holz, Holzwerkstoffen, Kunststoff oder dergleichen, wie es beispielsweise im Bereich der Möbel- und Bauelementeindustrie zum Einsatz kommt, ausgebildet. Dabei kann es sich beispielsweise um eine Massivholz- oder Spanplatte, Leichtbauplatte, Sandwichplatte oder dergleichen handeln. Rein beispielhaft handelt es sich um Möbelfronten, Möbelkorpusse, Einlegebretter, im Bereich Büro, Küchen, Schlaf- und Wohnmöbel, Fußbodenpaneele, usw.

### Erste bevorzugte Ausführungsform

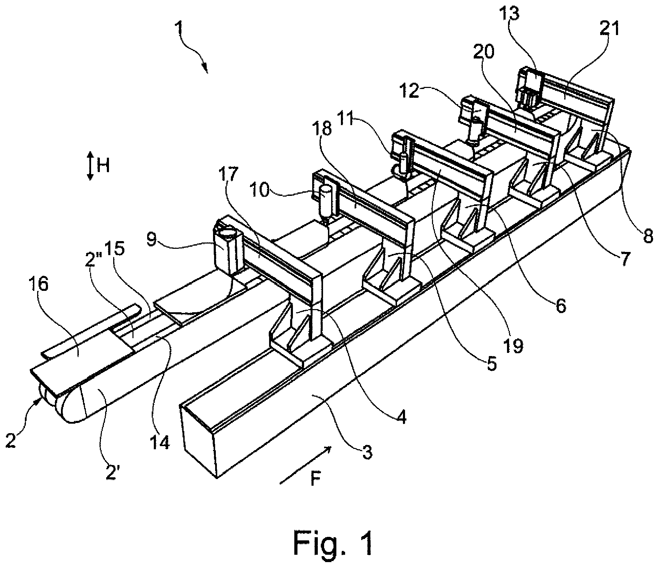

Fig. 1 zeigt eine perspektivische Ansicht der Vorrichtung 1 der ersten Ausführungsform. Die Vorrichtung 1 weist eine Fördereinrichtung 2, eine Trageinrichtung 3 und fünf Stützeinrichtungen 4, 5, 6, 7, 8 mit jeweils einer Bearbeitungseinrichtung 9, 10, 11, 12, 13 auf.

Die Fördereinrichtung 2 ist in dieser Ausführungsform umlaufend und bevorzugt in Form einer Förderkette ausgebildet. In dieser bevorzugten Ausführungsform weist die Förderkette zwei Förderketteneinheiten 2' und 2" auf. Die Ausführungsform ist hierauf jedoch nicht beschränkt und kann mehr oder weniger Förderketteneinheiten aufweisen. Die Förderketteneinheiten 2' und 2" sind in der gezeigten Ausführungsform bevorzugt identisch zueinander ausgebildet und parallel zueinander angeordnet, sodass ein Werkstück 16 auf der Fördereinrichtung 2 entlang zweier Förderbahnen, insbesondere Förderriemen oder Förderketten, 14 und 15 abgelegt und gefördert werden kann. In der vorliegenden Ausführungsform wird die Ausgestaltung als Förderkette bevorzugt.

Die Förderketteneinheiten 2' und 2" der Fördereinrichtung 2 sind dabei so ausgestaltet, dass diese das Werkstück 16 lediglich von der Auflageseite des Werkstücks 16 auf den Förderbahnen 14 und 15 aus fixieren. Das Werkstück liegt dabei so auf den Förderbahnen 14, 15 oder an hieran angebrachten Halteelementen auf, dass alle vier Schmalseiten, die Oberseite sowie Bereiche der Unterseite des Werkstücks 16 zugänglich und mit den Bearbeitungseinrichtungen 9, 10, 11, 12, 13 bearbeitbar sind. Dabei wird das Werkstück derart fixiert, dass es während der Bearbeitung mit den Bearbeitungseinrichtungen 9, 10, 11, 12, 13 nicht verrutscht. Die Fixierung erfolgt in dieser bevorzugten Ausführungsform mittels Vakuumspannern.

Die Vakuumspanner sind hierbei an der umlaufenden Förderkette, insbesondere an Platten der Förderkette, angebracht, so dass diese das Werkstück im gehaltenen Zustand von der Förderkette beabstanden. Durch Aufbringen eines Vakuums an der zum Werkstück weisenden Seite des Vakuumsspanners wird ein plattenförmiges Werkstück 16 an der Förderkette gehalten, und kann somit in einer Aufspannung zu verschiedenen Bearbeitungsstationen bewegt werden.

Das Vakuum kann hierbei auf verschiedenste Arten zu den Vakuumspanner geleitet werden, beispielsweise durch die Förderkette hindurch oder mittels einem parallel zur Förderkette verlaufenden Versorgungsstrang, der wiederum über Bohrungen in den Platten, welche die Vakuumspanner aufnehmen, mit diesen in Fluidkontakt steht.

Parallel zu den Förderketteneinheiten 2' und 2" der Fördereinrichtung 2 ist eine Trageinrichtung 3 angeordnet. Die Trageinrichtung 3 erstreckt sich dabei bevorzugt entlang eines Großteils, z.B. entlang von mindestens 70%, der Längserstreckung der Fördereinrichtung 2. Die Trageinrichtung 3 ist dabei bevorzugt mit einem rechteckigen Querschnittsprofil ausgestaltet und weist eine Höhenerstreckung auf, die in der gleichen Größenordnung wie die Höhenerstreckung der Fördereinrichtung 2 liegt. Dabei sind Fördereinrichtung 2 und Trageinrichtung 3 bevorzugt über ein gemeinsames nicht gezeigtes Maschinenbett gelagert. Das Maschinenbett kann dabei im Querschnitt eine U-Form aufweisen.

Die Trageinrichtung 3 ist dabei ferner ausgestaltet, fünf Stützreinrichtungen 4, 5, 6, 7, 8 zu tragen. Die Stützreinrichtungen 4, 5, 6, 7, 8 sind im Rahmen dieser bevorzugten Ausführungsform in Form von Auslegern vorgesehen. Die Ausleger 4, 5, 6, 7, 8 überspannen dabei zumindest abschnittsweise die Fördereinrichtung 2. Bevorzugt überspannen die Ausleger 4, 5, 6, 7, 8 die Fördereinrichtung 2 vollständig. Unter einer vollständigen Überspannung wird im Rahmen der vorliegenden Erfindung eine Ausgestaltung verstanden, bei welcher sich die Ausleger 4, 5, 6, 7, 8 entlang der gesamten Quererstreckung der Fördereinrichtung 2 erstrecken. Die vorliegende Ausführungsform ist jedoch nicht auf Stützeinrichtungen in Form von Auslegern beschränkt. Alternativ können die Stützeinrichtungen 4, 5, 6, 7, 8 auch in Form von Portalen ausgebildet sein, welche jeweils die Fördereinrichtung 2 über spannen. Ebenso ist es denkbar, eine Kombination aus Portalen und Auslegern vorzusehen.

In der vorliegenden ersten Ausführungsform sind die Ausleger 4, 5, 6, 7, 8 auf der Trageinrichtung 3 in Förderrichtung F des Werkstücks 16 nicht bewegbar vorgesehen. Die Ausleger 4, 5, 6, 7, 8 weisen jeweils einen Auslegerarm auf, die sich jeweils über beide Förderketteneinheiten 2' und 2" der Förderkette 2 und bevorzugt senkrecht zur Förderrichtung F des Werkstücks 16 erstrecken. Ebenso ist hier eine Ausgestaltung denkbar, bei der sich die Auslegerarme mit einem Winkel zur Förderrichtung F erstrecken.

In der vorliegenden Ausführungsform weist jede der Stützeinrichtungen 4, 5, 6, 7, 8 eine Verstelleinrichtung 17, 18, 19, 20, 21 auf. Alternativ ist ebenfalls denkbar, dass keine der Stützeinrichtungen 4, 5, 6, 7, 8 eine Verstelleinrichtung 17, 18, 19, 20, 21 oder nur einige der Stützeinrichtungen 4, 5, 6, 7, 8 eine Verstelleinrichtung 17, 18, 19, 20, 21 aufweist. An den Verstelleinrichtungen 17, 18, 19, 20, 21 der Stützeinrichtungen 4, 5, 6, 7, 8 der vorliegenden Ausführungsform sind jeweils die Bearbeitungseinrichtungen 9, 10, 11, 12, 13 vorgesehen. Die Verstelleinrichtungen 17, 18, 19, 20, 21 sind dabei jeweils derart ausgestaltet, dass mittels dieser die Bearbeitungseinrichtungen 9, 10, 11, 12, 13 quer zur Förderrichtung F verfahrbar sind. Folglich wird mittels der Verstelleinrichtungen 17, 18, 19, 20, 21 zusätzlich zur Förderrichtung F eine weitere Bearbeitungsachse für jede der Bearbeitungseinrichtungen 9, 10, 11, 12, 13 bereitgestellt. Die Verstelleinrichtungen 17, 18, 19, 20, 21 können eine oder mehrere Führung(en), bevorzugt zwei Führungen bzw. Führungsschienen, die sich parallel zur Auslegerarmerstreckung erstrecken, jeweils am Auslegerarm der Ausleger 4, 5, 6, 7, 8 aufweisen. Bevorzugt weisen die Verstelleinrichtungen 17, 18, 19, 20, 21 dabei jeweils eine Trägerplatte auf, welche jeweils über die Führung(en) geführt wird/werden, an der jeweils die Bearbeitungseinrichtung 9, 10, 11, 12, 13 angebracht ist.

Die Verstelleinrichtungen 17, 18, 19, 20, 21 können ferner ausgestaltet sein, die Bearbeitungseinrichtungen 9, 10, 11, 12, 13 in die Höhenerstreckungsrichtung H der Vorrichtung 1 zu verstellen. Ferner können die Verstelleinrichtungen 17, 18, 19, 20, 21 jeweils eine Antriebseinrichtung zum Antreiben der Verstellbewegung(en) aufweisen.

Die vorliegende Ausführungsform weist ferner fünf Bearbeitungseinrichtungen 9, 10, 11, 12, 13 auf, die jeweils an den Trägerplatten der Verstelleinrichtungen 17, 18, 19, 20, 21 der Stützeinrichtungen 4, 5, 6, 7, 8 vorgesehen sind. Die Bearbeitungseinrichtungen 9, 10, 11, 12, 13 und/oder die Stützeinrichtungen 4, 5, 6, 7, 8 können dabei so ausgestaltet sein, dass die Bearbeitungseinrichtungen 9, 10, 11, 12, 13 auswechselbar sind. Ebenso kann die Vorrichtung 1 eine nicht gezeigte Werkzeugwechseleinrichtung aufweisen, mittels der die einzelnen Bearbeitungseinrichtungen 9, 10, 11, 12, 13 gegen andere auswechselbar sind. Ebenso ist es denkbar, mit der Werkzeugwechseleinrichtung lediglich ein Werkzeug in der Einrichtung und nicht die gesamte Einrichtung auszuwechseln.

In der vorliegenden Ausführungsform weist die erste Bearbeitungseinrichtung 9 eine Fräseinrichtung, die zweite Bearbeitungseinrichtung 10 eine Verleimeinrichtung, die dritte Bearbeitungseinrichtung 11 eine Kapp- bzw. Bündigfräseinrichtung, die vierte Bearbeitungseinrichtung 12 eine Profilziehklingeneinrichtung und die fünfte Bearbeitungseinrichtung 13 eine Bohreinrichtung auf. Selbstverständlich sind hier jeweils auch andere Einrichtungen denkbar, wie eine Profil-, eine Nut-, eine Lackier-, eine Dübel-, eine Schleif-, eine Vergütungs-, eine Beschlagsetzbearbeitungseinrichtung oder einer Kombination der vorherigen.

Die Vorrichtung 1 weist ferner bevorzugt eine nicht gezeigte Steuerung auf, die eingerichtet ist, die Verstelleinrichtungen 17, 18, 19, 20, 21 der Stützeinrichtungen 4, 5, 6, 7, 8 sowie die Bearbeitungseinrichtungen 9, 10, 11, 12, 13 unabhängig voneinander und bevorzugt während der Bearbeitung zu steuern. Bevorzugt handelt es sich hier um eine CNC-Steuerung.

### Zweite bevorzugte Ausführungsform

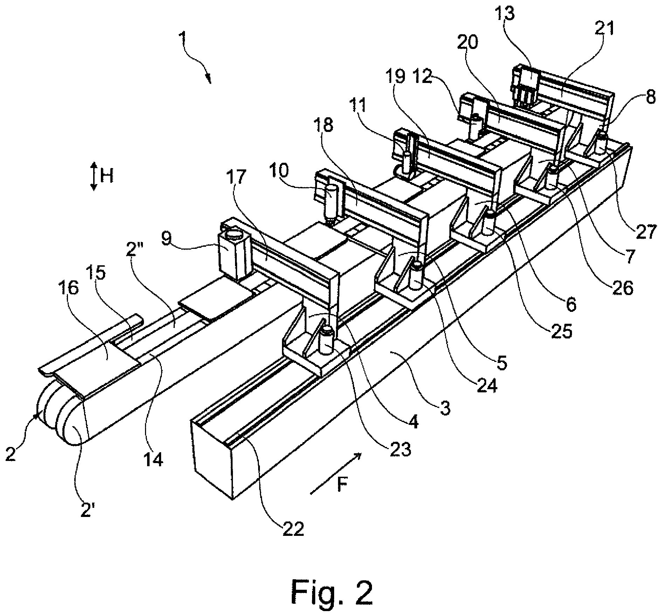

Fig. 2 zeigt eine zweite bevorzugte Ausführungsform der vorliegenden Erfindung. Die zweite bevorzugte Ausführungsform unterscheidet sich von der ersten bevorzugten Ausführungsform dadurch, dass die Trageinrichtung 3 eine Längsführung 22 und die Stützeinrichtungen Verschiebeeinrichtungen 23, 24, 25, 26, 27 aufweisen. Im Folgenden wird auf die Unterschiede der zweiten bevorzugten Ausführungsform zur ersten bevorzugten Ausführungsform eingegangen, während hinsichtlich der sonstigen Ausgestaltung auf die Ausführungen zur ersten bevorzugten Ausführungsform verwiesen wird.

Wie zuvor ausgeführt, weist die Trageinrichtung 3 der zweiten bevorzugten Ausführungsform eine auf deren Oberseite angeordnete Längsführung 22 auf. Auf dieser Längsführung 22 sind die Stützeinrichtungen 4, 5, 6, 7, 8 in Förderrichtung F verschiebbar gelagert. Dabei sind die Stützeinrichtungen 4, 5, 6, 7, 8 unabhängig voneinander auf der Längsführung 22 der Trageinrichtung 3 und bevorzugt entlang deren gesamten Erstreckung verschiebbar. Die Längsführung 22 erstreckt sich dabei bevorzugt entlang der gesamten Trageinrichtung 3.

Darüber hinaus weist die Vorrichtung 1 Verschiebeeinrichtungen 23, 24, 25, 26, 27 auf, welche jeweils ausgestaltet sind, die Stützeinrichtungen 4, 5, 6, 7, 8 entlang der Längsführung 22 der Trageinrichtung 3 und damit entlang der Fördereinrichtung 2 zu verschieben. Der Verschiebereich von jeder Verschiebeeinrichtung 23, 24, 25, 26, 27 in dieser bevorzugten Ausführungsform entspricht dabei der gesamten Längsführungslänge, sodass sich die Verschiebebereich aller Verschiebeeinrichtungen 23, 24, 25, 26, 27 vollständig überlappen.

Die Verschiebeeinrichtungen 23, 24, 25, 26, 27 weisen dabei jeweils bevorzugt eine Antriebseinrichtung auf, welche die Verschiebebewegung der Stützeinrichtungen 4, 5, 6, 7, 8 entlang der Längsführung 22 der Trageinrichtung 3 antreibt. Hier ist ein Direktantrieb denkbar. Ebenfalls ist es denkbar, dass mehrere Stützeinrichtungen gemeinsam über einen Antrieb verschoben werden können.

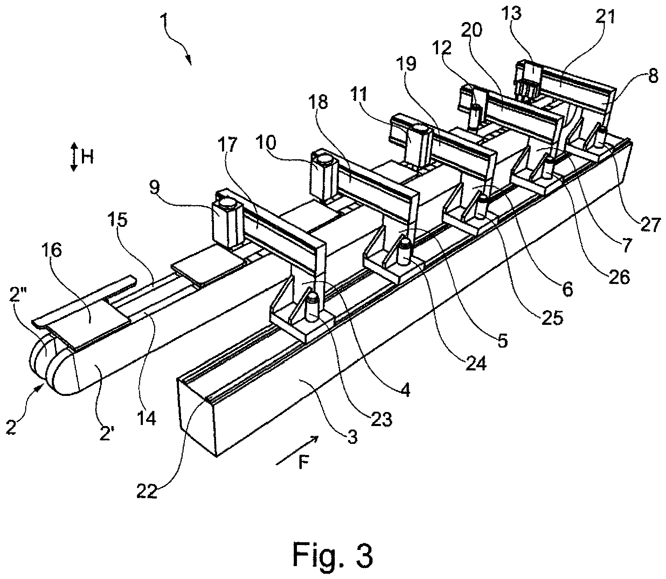

Alternativ kann, wie in Fig. 3 gezeigt, die erste Bearbeitungseinrichtung 9 eine Fräseinrichtung, die zweite Bearbeitungseinrichtung 10 eine Fräseinrichtung, die dritte Bearbeitungseinrichtung 11 eine Profiliereinrichtung, die vierte Bearbeitungseinrichtung 12 eine Nuteinrichtung und die fünfte Bearbeitungseinrichtung 13 eine Bohreinrichtung aufweisen, während die sonstige Ausgestaltung jener der sonstigen Ausführung im Rahmen der zweiten bevorzugten Ausführungsform entspricht.

### Dritte bevorzugte Ausführungsform

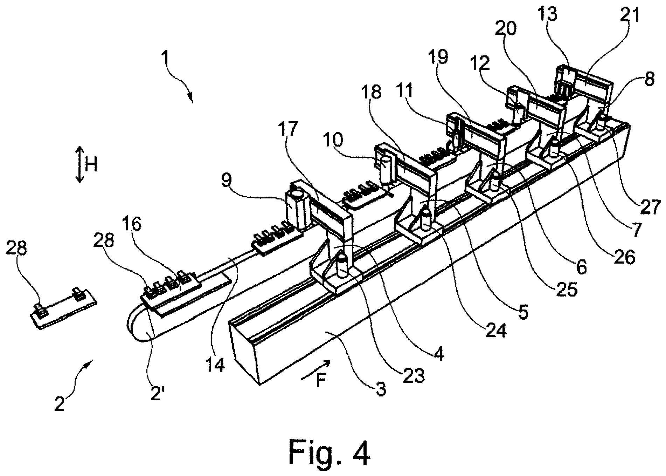

Fig. 4 zeigt eine Vorrichtung 1 einer dritten bevorzugten Ausführungsform der vorliegenden Erfindung.

Die Vorrichtung 1 der dritten bevorzugten Ausführungsform unterscheidet sich von der Vorrichtung der zweiten bevorzugten Ausführungsform in der Ausgestaltung der Fördereinrichtung 2. Im Folgenden wird demnach lediglich auf die Unterschiede zur zweiten bevorzugten Ausführungsform eingegangen, während hinsichtlich der sonstigen Ausgestaltung auf die Ausführungen im Rahmen der zweiten bevorzugten Ausführungsform verwiesen wird.

Die Fördereinrichtung 2 der dritten bevorzugten Ausführungsform weist lediglich eine Förderketteneinheit 2' auf.

Dabei wird das Werkstück 16 im Rahmen der dritten bevorzugten Ausführungsform mittels pneumatischen oder elektromechanischen Spannern 28 auf der Förderbahn 14 der Förderkette 2 fixiert. Die Spanner 28 sind dabei bevorzugt auf einer Seite der Förderbahn 14 und fest an der Fördereinrichtung 2 vorgesehen. Die Versorgung der Spanner mit Über- oder Unterdruck kann ähnlich wie bei den bereits zuvor beschriebenen Vakuumspannern erfolgen. Auch können elektrische Versorgungsleitungen in oder an der Förderbahn/ Förderkette geführt werden.

Dabei weist die vorliegende dritte bevorzugte Ausführungsform bevorzugt Gruppen von Spannern auf, die in Abständen zueinander entlang der Förderbahn 14 vorgesehen sind. In der vorliegenden Ausführungsform umfassen die einzelnen Gruppen jeweils vier Spanner 28.

Ferner kann die Fördereinrichtung 2 zusätzlich ausgestaltet sein, dass Werkstück 16 mittels Vakuum an der Fördereinrichtung 2 zu fixieren. Hinsichtlich einer derartigen Ausgestaltung wird auf die Ausführungen im Rahmen der zweiten Ausführungsform verwiesen.

Ferner ist es ebenfalls denkbar, dass die Spanner 28 ausgestaltet sind, im Bereich der Bearbeitungseinrichtungen 9, 10, 11, 12, 13 das Werkstück 16 freizugeben und sich entweder quer zur Förderrichtung zurückzuziehen oder in Höhenrichtung der Vorrichtung 1 abzusenken, sodass keine der Werkstückseiten durch die Spanner 28 blockiert und somit eine Rundumbearbeitung ermöglicht wird.

## Patentansprüche

1. Verfahren zum Bearbeiten eines insbesondere plattenförmigen Werkstücks (16), das bevorzugt zumindest abschnittsweise aus Holz, Holzwerkstoffen, Kunststoff oder dergleichen besteht, unter Verwendung einer Vorrichtung (1) mit
einer Bearbeitungseinrichtung (9) zum Bearbeiten eines Werkstücks (16),
einer Fördereinrichtung (2) zum Fördern des Werkstücks (16) in eine Förderrichtung (F), wobei die Fördereinrichtung (2) umlaufend ausgestaltet ist,
einer Stützeinrichtung (4), insbesondere einem Ausleger oder einem Portal, welche sich zumindest abschnittsweise, insbesondere vollständig, über die Fördereinrichtung (2) erstreckt und an der die Bearbeitungseinrichtung (9) vorgesehen ist,
einer Verschiebeeinrichtung (23) zum Verschieben, insbesondere variablen Verschieben, der Stützeinrichtung (4) entlang der Förderrichtung (F), wobei die Verschiebeeinrichtung (23) eine Antriebseinrichtung zum Antreiben der Verschiebebewegung aufweist, und mindestens einer weiteren Stützeinrichtung (5), die sich zumindest abschnittsweise über die Fördereinrichtung (2) erstreckt,
mindestens einer weiteren Verschiebeeinrichtung (24) zum Verschieben, insbesondere variablen Verschieben, der mindestens einen weiteren Stützeinrichtung (5) entlang der Förderrichtung (F), wobei die Stützeinrichtungen (4, 5) unabhängig voneinander entlang der Förderrichtung (F) und während der Bearbeitung verschiebbar sind, und
mindestens einer weiteren Bearbeitungseinrichtung (10) zum Bearbeiten des Werkstücks (16), die an der mindestens einen weiteren Stützeinrichtung (5) vorgesehen ist,
wobei das Verfahren die Schritte aufweist:
Fördern eines Werkstücks (16) mit der umlaufenden Fördereinrichtung (2),
Bearbeiten des Werkstücks (16) mit der Bearbeitungseinrichtung (9), wobei die Relativbewegung zwischen Bearbeitungseinrichtung (9) und Werkstück (16) durch die Fördereinrichtung (2) herbeigeführt wird, und
Bearbeiten des Werkstücks (16) mit der Bearbeitungseinrichtung (9), wobei die Relativbewegung zwischen Bearbeitungseinrichtung (9) und Werkstück (16) mit der Stützeinrichtung (4) herbeigeführt wird.

2. Verfahren nach Anspruch 1, **dadurch gekennzeichnet dass** sich die mindestens eine weitere Stützeinrichtung (5) vollständig über die Fördereinrichtung (2) erstreckt.

3. Verfahren nach Anspruch 2, bei der die Stützeinrichtungen (4, 5) auf einer Seite der Fördereinrichtung (2) angeordnet sind.

4. Verfahren nach einem der vorherigen Ansprüche, bei welcher die Verschiebeeinrichtung (23) und die mindestens eine weitere Verschiebeeinrichtung (24) jeweils einen Verschiebebereich aufweisen, wobei sich die Verschiebebereiche zumindest abschnittsweise, bevorzugt zu mehr als 50%, besonders bevorzugt zu mehr als 90%, überlappen.

5. Verfahren nach einem der vorherigen Ansprüche, ferner mit einer Führung (22) zum Führen der Stützeinrichtung(en) (4, 5) entlang der Förderrichtung (F).

6. Verfahren nach einem der vorhergehenden Ansprüche, bei der die Stützeinrichtung(en) (4, 5) parallel zur Förderrichtung (F) verschiebbar ist/sind.

7. Verfahren nach einem der vorherigen Ansprüche, bei welcher die Stützeinrichtung(en) (4, 5) jeweils eine Verstelleinrichtung (17, 18) aufweisen, die ausgestaltet ist, die Bearbeitungseinrichtung (9, 10) quer zur Förderrichtung (F), bevorzugt auch in Höhenrichtung (H) der Vorrichtung (1), zu verstellen.

8. Verfahren nach einem der vorhergehenden Ansprüche, bei welcher an einer Förderbahn (14, 15) der Fördereinrichtung (2) eine Halteeinrichtung zum Fixieren des Werkstücks (16) während der Bearbeitung auf der Fördereinrichtung (2) vorgesehen ist, welche Halteeinrichtung bevorzugt ausgestaltet ist, das Werkstück (16) von der Auflageseite des Werkstücks (16) aus, besonders bevorzugt mittels Vakuum, zu fixieren, oder die Halteeinrichtung bevorzugt eine Spanneinrichtung ist, wobei bevorzugt das Werkstück (16) lediglich von der Auflageseite des Werkstücks aus fixiert wird.

9. Verfahren nach einem der vorhergehenden Ansprüche, bei welcher die Bearbeitungseinrichtung(en) (9, 10) ausgewählt ist/sind aus einer Format-, einer Profil-, einer Nut-, einer Kantenleim-, einer Kapp-, einer Lackier-, einer Bohr-, einer Dübel-, einer Ziehklingen-, einer Schleif-, einer Vergütungs-, einer Beschlagsetzbearbeitungseinrichtung und einer Kombination der vorherigen.

10. Verfahren nach einem der vorhergehenden Ansprüche, bei welcher die Fördereinrichtung (2) als Förderkette ausgestaltet ist.

11. Verfahren nach einem der vorherigen Ansprüche, bei der die Verschiebeeinrichtung(en) (23, 24) und/oder die Verstelleinrichtung(en) (17, 18) eine Antriebseinrichtung zum Antreiben der Verschiebebewegung bzw. Verstellbewegung aufweist/aufweisen, die bevorzugt CNC gesteuert ist.

## Claims

1. Method for machining a, in particular planar, workpiece (16), which is preferably composed at least in part of wood, wood materials, plastics material or the like, using a device (1) comprising
a machining apparatus (9) for machining a workpiece (16),
a conveying apparatus (2) for conveying the workpiece (16) in a conveying direction (F), wherein the conveying apparatus (2) is designed to revolve,
a support apparatus (4), in particular a cantilever arm or gantry, which extends over the conveying apparatus (2) at least in part, in particular fully, and on which the machining apparatus (9) is provided,
a shifting apparatus (23) for shifting, in particular for variably shifting, the support apparatus (4) in the conveying direction (F), wherein the shifting apparatus (23) comprises a drive apparatus for driving the shifting movement, and
at least one additional support apparatus (5), which extends over the conveying apparatus (2) at least in part,
at least one additional shifting apparatus (24) for shifting, in particular for variably shifting, the at least one additional support apparatus (5) in the conveying direction (F), wherein the support apparatuses (4, 5) can be shifted independently of one another in the conveying direction (F) and during the machining, and
at least one additional machining apparatus (10) for machining the workpiece (16), which is provided on the at least one additional support apparatus (5),
wherein the method comprises the steps of:
conveying a workpiece (16) by means of the revolving conveying apparatus (2),
machining the workpiece (16) by means of the machining apparatus (9), wherein the relative movement between the machining apparatus (9) and the workpiece (16) is produced by means of the conveying apparatus (2), and
machining the workpiece (16) by means of the machining apparatus (9), wherein the relative movement between the machining apparatus (9) and the workpiece (16) is produced by means of the support apparatus (4).

2. Method according to claim 1, **characterised in that** the at least one additional support apparatus (5) fully extends over the conveying apparatus (2).

3. Method according to claim 2, wherein the support apparatuses (4, 5) are arranged on one side of the conveying apparatus (2).

4. Method according to any of the preceding claims, wherein the shifting apparatus (23) and the at least one additional shifting apparatus (24) each comprise a shifting region, wherein the shifting regions overlap at least in part, preferably by more than 50%, particularly preferably by more than 90%.

5. Method according to any of the preceding claims, further comprising a guide (22) for guiding the support apparatus(es) (4, 5) in the conveying direction (F).

6. Method according to any of the preceding claims, wherein the support apparatus(es) (4, 5) can be shifted in parallel with the conveying direction (F).

7. Method according to any of the preceding claims, wherein the support apparatus(es) (4, 5) each comprise a displacement apparatus (17, 18) that is designed to displace the machining apparatus (9, 10) transversely to the conveying direction (F), preferably also in the vertical direction (H) of the device (1).

8. Method according to any of the preceding claims, wherein a holding apparatus for securing the workpiece (16) on the conveying apparatus (2) during machining is provided on a conveyor track (14, 15) of the conveying apparatus (2), which holding apparatus is preferably designed to secure the workpiece (16) from the contact side of the workpiece (16), particularly preferably by means of a vacuum, or the holding apparatus is preferably a tensioning apparatus, wherein the workpiece (16) is preferably secured from only the contact side of the workpiece.

9. Method according to any of the preceding claims, wherein the machining apparatus(es) (9, 10) is/are selected from a sizing, profiling, grooving, edge-jointing, trimming, lacquering, drilling, dowelling, scraping, grinding, tempering, fitting-mounting machining apparatus and a combination of the above.

10. Method according to any of the preceding claims, wherein the conveying apparatus (2) is designed as a chain conveyor.

11. Method according to any of the preceding claims, wherein the shifting apparatus(es) (23, 24) and/or the displacement apparatus(es) (17, 18) comprises/comprise a, preferably CNC-controlled, drive apparatus for driving the shifting movement or displacement movement.

## Revendications

1. Procédé de traitement d'une pièce à usiner (16), en particulier en forme de plaque, qui est constituée au moins en partie de préférence de bois, de matériaux en bois, de plastique ou analogues, à l'aide d'un appareil (1) comportant
un dispositif d'usinage (9) pour usiner une pièce à usiner (16),
un dispositif de transport (2) pour transporter la pièce à usiner (16) dans une direction de transport (F), dans lequel le dispositif de transport (2) est conçu de manière rotative,
un dispositif de support (4), en particulier une flèche ou un portail, qui s'étend au moins en partie, en particulier complètement, au-dessus du dispositif de transport (2) et sur lequel est prévu le dispositif de traitement (9),
un dispositif de déplacement (23) pour déplacer, en particulier déplacer de manière variable, le dispositif de support (4) le long de la direction de transport (F), dans lequel le dispositif de déplacement (23) présente un dispositif d'entraînement pour entraîner le déplacement, et
au moins un dispositif de support supplémentaire (5) qui s'étend au moins en partie au-dessus du dispositif de transport (2),
au moins un dispositif de déplacement supplémentaire (24) pour déplacer, en particulier pour déplacer de manière variable, le au moins un dispositif de support supplémentaire (5) dans la direction de transport (F), dans lequel les dispositifs de support (4, 5) sont mobiles indépendamment l'un de l'autre dans la direction de transport (F) et pendant le traitement, et
au moins un dispositif de traitement supplémentaire (10) pour traiter la pièce à usiner (16), qui est prévu sur le au moins un dispositif de support supplémentaire (5),
le procédé comprenant les étapes consistant à :
transporter une pièce à usiner (16) avec le dispositif de transport rotatif (2),
traiter la pièce à usiner (16) à l'aide du dispositif de traitement (9), dans lequel le déplacement relatif entre le dispositif de traitement (9) et la pièce à usiner (16) est effectué par le dispositif de transport (2), et
traiter la pièce à usiner (16) à l'aide du dispositif de traitement (9), dans lequel le mouvement relatif entre le dispositif d'usinage (9) et la pièce à usiner (16) est effectué avec le dispositif de support (4).

2. Procédé selon la revendication 1, **caractérisé en ce que** le au moins un dispositif de support supplémentaire (5) s'étend complètement au-dessus du dispositif de transport (2).

3. Procédé selon la revendication 2, dans lequel les dispositifs de support (4, 5) sont disposés sur un côté du dispositif de transport (2).

4. Procédé selon l'une quelconque des revendications précédentes, dans lequel le dispositif de déplacement (23) et le au moins un dispositif de déplacement supplémentaire (24) présentent chacun une zone de déplacement, dans lequel les zones de déplacement se chevauchent au moins en partie, de préférence à plus de 50 %, de manière particulièrement préférée à plus de 90 %.

5. Procédé selon l'une quelconque des revendications précédentes, comprenant en outre un guide (22) pour guider le ou les dispositifs de support (4, 5) le long de la direction de transport (F).

6. Procédé selon l'une quelconque des revendications précédentes, dans lequel le ou les dispositifs de support (4, 5) peut ou peuvent être déplacés parallèlement à la direction de transport (F).

7. Procédé selon l'une quelconque des revendications précédentes, dans lequel le ou les dispositifs de support (4, 5) présentent chacun un dispositif de réglage (17, 18) qui est configuré pour régler le dispositif de traitement (9, 10) transversalement à la direction de convoyage (F), de préférence également être réglé dans la direction de hauteur (H) de l'appareil (1).

8. Procédé selon l'une quelconque des revendications précédentes, dans lequel sur une piste de transport (14, 15) du dispositif de transport (2) est prévu un dispositif de maintien pour fixer la pièce à usiner (16) pendant le traitement sur le dispositif de traitement (2), lequel dispositif de maintien est de préférence conçu pour fixer la pièce à usiner (16) depuis le côté de support de la pièce à usiner (16), de manière particulièrement préférée au moyen d'un vide, ou le dispositif de maintien est de préférence un dispositif de serrage, dans lequel de préférence la pièce à usiner (16) est est fixée uniquement depuis le côté de support de la pièce à usiner.

9. Procédé selon l'une quelconque des revendications précédentes, dans lequel le ou les dispositifs de traitement (9, 10) sont sélectionnés parmi un dispositif de traitement de format, de profil, de rainure, d'encollage de bords, d'opercule, de peinture, de perçage, de cheville, à lame de raclage, de meulage, de compensation, d'ajustement de réglage et une combinaison de ceux-ci.

10. Procédé selon l'une quelconque des revendications précédentes, dans lequel le dispositif de traitement (2) est conçu comme une chaîne de transport.

11. Procédé selon l'une quelconque des revendications précédentes, dans lequel le ou les dispositifs de déplacement (23, 24) et/ou le ou les dispositifs de réglage (17, 18) ont un dispositif d'entraînement pour entraîner le déplacement ou le déplacement de réglage, qui est de préférence à commande numérique, CNC.
